# EUROPEAN PATENT APPLICATION

(11) **EP 4 592 740 A1**
(43) Date of publication of application: **30.07.2025**
(21) Application number: 24194287.9
(22) Date of filing: 13.08.2024
(51) Int. Cl.: G02C 1/06, G02C 1/00, G02C 5/00

(54) **BUFFALO HORN EYEWEAR AND METHOD OF USE THEREOF**

(30) Priority: 29.01.2024 CN 202410122203
(71) Applicant: Odd Skin Out Limited, Hong Kong (HK)
(72) Inventor: KWA, TI SIANG, HONG KONG (HK)
(74) Representative: Cleanthous, Marinos

(57) **Abstract**

Disclosed in the present invention are a buffalo horn eyewear and a method of use thereof, where the buffalo horn eyewear includes a first spectacle bow, a second spectacle bow, a first elastic fastening assembly, a second elastic fastening assembly, a first lens and a second lens, the second spectacle bow is symmetrical with the first spectacle bow and connected with the first spectacle bow, a first mounting slot is provided in the first spectacle bow, a second mounting slot is provided in the second spectacle bow, the first spectacle bow is provided with a first notch and a first connecting hole, and the second spectacle bow is provided with a second notch and a second connecting hole. The present invention has the advantages of convenient mounting of the lenses, convenient disassembly and replacement of the lenses, etc.

## Description

### FIELD OF TECHNOLOGY

The present invention belongs to the field of eyewear technology, and in particular, relating to a buffalo horn eyewear and its method of use thereof.

### BACKGROUND

An eyewear is a combination of spectacle lenses and a spectacle frame which is an article used for improving vision, protecting eyes, or for decorative purposes. The eyewear can correct a variety of vision problems, including nearsightedness, farsightedness, astigmatism, presbyopia, strabismus or amblyopia etc. Existing eyewears are mostly composed of spectacle frames made of cellulose acetate plates or metal, but the use of cellulose acetate spectacles frames is prone to causing allergies. Moreover, as society develops, people have higher pursuits for eyewear textures and shapes. Existing frames made of cellulose acetate plates or metal cannot meet these demands, giving rise to the emergence of frames made of buffalo horn. Not only are buffalo horn frames made of natural buffalo horn, and have a higher degree of textural quality, and are non-polluting, they can also prevent allergic reactions caused by wearing the frames.

For example, Chinese patent application No. 201921744758.0 discloses a spectacle frame which comprises a spectacle bow and two spectacle legs connected to both sides of the spectacle bow, wherein the spectacle bow comprises pile heads, the pile heads are hinged to one end of metal connecting pieces, whose other ends extend into countersink holes created at one end of the spectacle legs, and are fastened in the countersink holes through fasteners. Each of the spectacle legs comprises a first buffalo horn layer, a second buffalo horn layer, and a rubber plate layer sandwiched between the first buffalo horn layer and the second buffalo horn layer, and the countersink holes are arranged on the rubber plate layers.

As another example, Chinese patent application No. 202120670674.8 discloses an elastic anti-fall buffalo horn eyewear which comprises two symmetric spectacle bows, and a connection column is fixed between the two symmetric spectacle bows, the connection column is consisted of a column body A and a column body B, the column body A is provided with an end slot at an end surface towards the column body B, an adjusting column is fixed at an end surface of the column body B and is embedded to an inner side of the end slot, a moving groove is provided in and passes through the middle of the surface of the adjusting column, a through pin is provided in and passes through the inner side of the moving groove, the bottom end of the through pin passes through and arrives at the outer side of the bottom of the column body A, the top inner wall of the end slot is provided with a placing groove, the top surface of the through pin is fixed with a rubber block, the top of the through pin is embedded into the inner side of the placing groove, and the surface of the rubber block is extruded and fitted with the inner wall of the placing groove.

The spectacle frame disclosed in the above patent application No. 201921744758.0 adopts spectacle legs which combine buffalo horn and rubber plate layers, and which still possess the structure of the rubber plate layer. In addition, gluing is needed in most production cases, and there is the possibility of causing allergies. The elastic anti-fall buffalo horn eyewear disclosed in patent application No. 202120670674.8 has a certain degree of anti-falling. Although eyewear of buffalo horn materials as per above have appeared, the following problems still exist: 1. Buffalo horn is generally used to make high-end eyewear, which are expensive, but due to the materiality of buffalo horn, installing lenses can be inconvenient. 2. Because buffalo horn eyewear is expensive, it is not easy to disassemble the lenses for repair.

### SUMMARY OF THE INVENTION

The present invention aims to solve the shortcomings of prior art by providing a buffalo horn eyewear and its method of use that are easy to disassemble and to install lenses.

To solve the above technical problems, the present invention adopts the following technical schemes:
A buffalo horn eyewear, comprising:
a first spectacle bow;
a second spectacle bow, which is symmetrical with the first spectacle bow and connected with the first spectacle bow, wherein a side of the first spectacle bow away from the second spectacle bow is provided with a first spectacle leg, a side of the second spectacle bow away from the first spectacle bow is provided with a second spectacle leg, a side of the first spectacle bow near the second spectacle bow is provided with a first nose bracket, a side of the second spectacle bow near the first spectacle bow is provided with a second nose bracket, a first mounting slot is provided in the first spectacle bow, a second mounting slot is provided in the second spectacle bow, the first spectacle bow is provided with a first notch and a first connecting hole, the first notch and the first connecting hole are connected with the first mounting slot, the second spectacle bow is provided with a second notch and a second connecting hole, and the second notch and the second connecting hole are connected with the second mounting slot;
a first elastic fastening assembly, which is positioned in the first mounting slot through the first notch and the second connecting hole;
a second elastic fastening assembly, which is positioned in the second mounting slot through the second notch and the second connecting hole;
a first lens, which is arranged in the first elastic fastening assembly; and
a second lens, which is arranged in the second elastic fastening assembly, and the first spectacle bow and the second spectacle bow are made of buffalo horn material.

Preferably, the first elastic fastening assembly comprises a first fastening ring, a first screw and a second screw, the first fastening ring is provided with a first convex part and a first opening, the first convex part is provided with a first through hole, the first convex part is clamped in the first connecting hole and the first through hole corresponds to the first connecting hole at the front and back ends, the first screw is arranged in the first connecting hole and the first through hole in a penetrating manner, both sides of the first opening of the first fastening ring are provided with a first connector and a second connector, the first connector and the second connector are adjacent and separated from each other, the second screw is arranged on the first connector and the second connector in a penetrating manner, the first connector and the second connector are clamped in the first notch, and the first lens is mounted in the first fastening ring.

Preferably, the second elastic fastening assembly comprises a second fastening ring, a third screw and a fourth screw, the second fastening ring is provided with a second convex part and a second opening, the second convex part is provided with a second through hole, the second convex part is clamped in the second connecting hole and the second through hole corresponds to the second connecting hole at the front and back ends, the third screw is arranged in the second connecting hole and the second through hole in a penetrating manner, both sides of the second opening of the second fastening ring are provided with a third connector and a fourth connector, the third connector and the fourth connector are adjacent and separated from each other, the fourth screw is arranged on the third connector and the fourth connector in a penetrating manner, the third connector and the fourth connector are clamped in the second notch, and the second lens is mounted in the second fastening ring.

Preferably, the first nose bracket, the second nose bracket, the first spectacle bow and the second spectacle bow are integrally formed, and the first nose bracket, the second nose bracket, the first spectacle leg and the second spectacle leg are all made of buffalo horn material.

The present invention also discloses a method for using the aforementioned buffalo horn eyewear, comprising the following steps:
S1. taking the first fastening ring and the second fastening ring, and then loosening the first screw, the second screw, the third screw and the fourth screw;
S2. taking the first lens and the second lens, and then enabling the first connector to be away from the second connector, and enabling the third connector to be away from the fourth connector, and widening the first opening and the second opening, and then clamping the first lens into the first fastening ring, and clamping the second lens into the second fastening ring;
S3. loosening the first connector and the second connector away from each other and the third connector and the fourth connector away from each other, and then mounting the first fastening ring in the first mounting slot, mounting the second fastening ring in the second mounting slot, and clamping the first connector and the second connector into the first notch, clamping the third connector and the fourth connector into the second notch, and at the same time, clamping the first convex part into the first connecting hole, and clamping the second convex part into the second connecting hole;
S4. aligning the first connecting hole and the first through hole and aligning the second connecting hole and the second through hole, and then taking the first screw and the third screw, so that the first screw is provided in the first connecting hole and the first through hole in a penetrating manner, and the third screw is provided in the second connecting hole and the second through hole in a penetrating manner;
S5. taking the second screw and the fourth screw, so that the second screw is provided on the first connector and the second connector in a penetrating manner, the fourth screw is provided on the third connector and the fourth connector in a penetrating manner; and
S6. wearing the buffalo horn eyewear by using the first spectacle leg, second spectacle leg, first nose bracket and second nose bracket.

Preferably, the method further comprises steps of replacing lenses:
loosening the second screw, then separating the first connector and the second connector and widening the first opening of the first fastening ring, then taking a new first lens to mount into the first fastening ring, then loosening the first fastening ring, and then providing the second screw on the first connector and the second connector in a penetrating manner; and
loosening the fourth screw, then separating the third connector and the fourth connector and widening the second opening of the second fastening ring, then taking a new second lens to mount into the second fastening ring, then loosening the second fastening ring, and then providing the fourth screw on the third connector and the fourth connector in a penetrating manner.

By adopting the above technical schemes, the present invention has the following beneficial effects:
(1) The present invention is provided with components such as the first mounting slot, the second mounting slot, the first fastening ring, the second fastening ring; specifically, the first lens and the second lens can be clamped and mounted by engaging them with the first fastening ring and the second fastening ring, making the installation of lenses more convenient;
(2) The first spectacle bow, the second spectacle bow, the first nose bracket, the second nose bracket, the first spectacle leg and the second spectacle leg of the present invention can all be made of buffalo horn material, which offers a good texture. Using buffalo horn material also avoids the possibility of allergic reactions caused by wearing eyewear made of cellulose acetate plates. Additionally, using buffalo horn material is more environmentally friendly.
(3) The first fastening ring of the present invention is provided with the first convex part, the second fastening ring is provided with the second convex part, the first spectacle bow is provided with the first notch, the second spectacle bow is provided with the second notch, and the first convex part, the second convex part, the first notch and the second notch can cooperate with each other to accurately position the first fastening ring and the second fastening ring of the present invention. Furthermore, the present invention also includes components such as the first connector, the second connector, the third connector, the fourth connector to facilitate the disassembly and replacement of the first lens and second lens.

In summary, the present invention has the advantages of convenient mounting of the lenses, convenient disassembly and replacement of the lenses, etc.

### BRIEF DESCRIPTION OF THE DRAWINGS

FIG. 1 is a structural diagram of the present invention with a first spectacle leg and a second spectacle leg removed;
FIG. 2 is a structural diagram of FIG. 1 in another direction;
FIG. 3 is a structural diagram of FIG. 1 with a first spectacle bow, a second spectacle bow, a first nose bracket and a second nose bracket removed; and
FIG. 4 is a structural diagram of the first spectacle bow and the second spectacle bow in the present invention.

### DESCRIPTION OF THE EMBODIMENTS

Below, the technical schemes of the present invention are described clearly and completely in combination with the accompanying drawings. Obviously, the embodiments described are part of the embodiments of the present invention, but not all embodiments.

The assemblies of embodiments of the present invention commonly described and shown in the drawings herein may be arranged and designed in a variety of different configurations. Accordingly, the following detailed description of embodiments of the present invention provided in the drawings is not intended to limit the protection scope of the present invention, but merely represents selected embodiments of the present invention.

Based on the embodiments of the present invention, all other embodiments obtained by an ordinary person skilled in this art without making any creative labor shall fall within the scope of protection of the present invention.

In the description of the present invention, it should be noted that orientation or position relationships indicated by the terms "center", "up", "down", "left", "right", "vertical", "horizontal", "inside", "outside", etc. are based on the orientation or position relationships shown in the drawings only for the purpose of facilitating the description of the present invention and simplifying the description. They do not indicate or imply that the device or element referred to must have a particular orientation, be constructed and operated in a particular orientation, and therefore cannot be construed as a limitation to the present invention. In addition, the terms "first," "second," and "third" are used for descriptive purposes only and are not understood to indicate or imply relative importance.

In the description of the present invention, it should be noted that, unless otherwise expressly specified and limited, the terms "mounting", "connected" and "connecting" shall be understood broadly, for example, they may be fixed connections, removable connections, or integrated connections; they may be mechanical connections, and can also be electrical connections; they may be direct connections, or they may be indirect connections through an intermediate medium, and they may be connections within two elements. For an ordinary person skilled in this art, the specific meaning of the above terms in the present invention can be understood on a case-by-case basis.

### Embodiment 1

In this embodiment, a buffalo horn eyewear and a method of use thereof are provided. The parts of the buffalo horn eyewear can be made of buffalo horn material, which is more environmentally friendly and avoids the phenomenon of allergic reactions caused by the use of cellulose acetate plates and glue in prior art for making and wearing eyewear. More importantly, in this invention the lenses can be conveniently disassembled and assembled, which solves the problem in prior art where the spectacle bows of buffalo horn eyewears are not easy to disassemble and assemble.

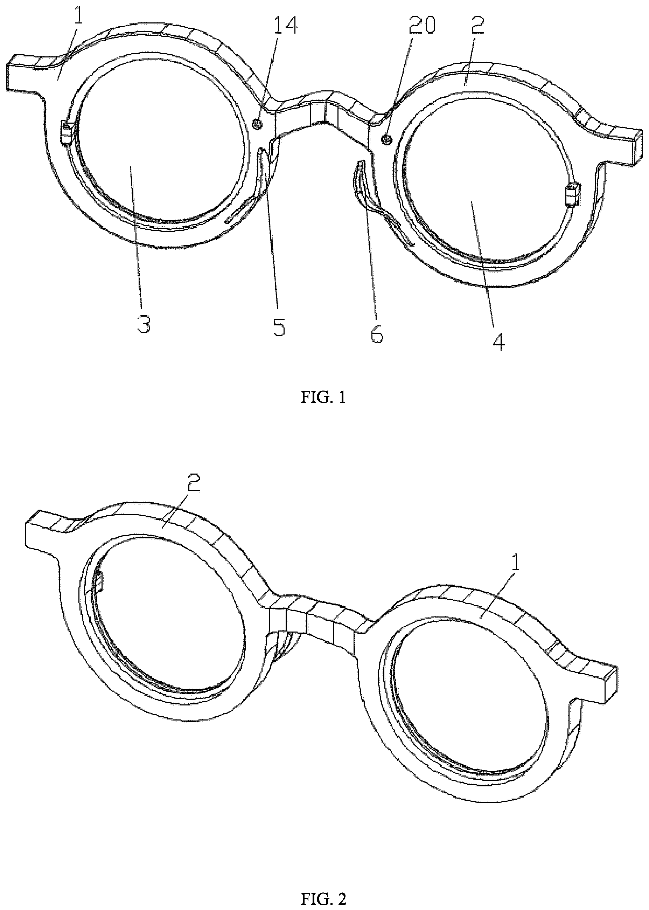

As shown in FIG. 1 to FIG. 4, in one embodiment of the present invention, the buffalo horn eyewear of the present invention comprises a first spectacle bow 1, a second spectacle bow 2, a first elastic fastening assembly, a second elastic fastening assembly, a first lens 3, and a second lens 4, wherein the second spectacle bow 2 is symmetrical with the first spectacle bow 1 and connected with the first spectacle bow 1, wherein a side of the first spectacle bow 1 away from the second spectacle bow 2 is provided with a first spectacle leg, a side of the second spectacle bow 2 away from the first spectacle bow 1 is provided with a second spectacle leg, a side of the first spectacle bow 1 near the second spectacle bow 2 is provided with a first nose bracket 5, a side of the second spectacle bow 2 near the first spectacle bow 1 is provided with a second nose bracket 6, a first mounting slot 7 is provided in the first spectacle bow 1, a second mounting slot 8 is provided in the second spectacle bow 2, the first spectacle bow 1 is provided with a first notch 9 and a first connecting hole 10, the first notch 9 and the first connecting hole 10 are connected with the first mounting slot 7, the second spectacle bow 2 is provided with a second notch 11 and a second connecting hole 12, and the second notch 11 and the second connecting hole 12 are connected with the second mounting slot 8;
The first spectacle leg and the second spectacle leg are both from existing mature technologies and are not shown in the accompanying drawings of the present invention. The first spectacle leg and the second spectacle leg can be made of ordinary cellulose acetate plates or metal or buffalo horn material according to requirements. The first spectacle bow 1 and the second spectacle bow 2 of the present invention are made of buffalo horn material and are integrally formed. The first nose bracket 5 and the second nose bracket 6 can be independent parts so that they are embedded on the first spectacle bow 1 and the second spectacle bow 2, and the first nose bracket and the second nose bracket can also be made of buffalo horn material so that they are integrated with the first spectacle bow 1 and the second spectacle bow 2. When the first nose bracket 5 and the second nose bracket 6 are independent parts so that they are embedded on the first spectacle bow 1 and the second spectacle bow 2, the first nose bracket 5 and the second nose bracket 6 can also be made of materials such as cellulose acetate plates or metal or plastic parts. It is understood that the first spectacle leg, the first nose bracket 5, the second nose bracket 6 and the second spectacle leg are located on the same side, that is, taking FIG. 1 as an example, the first spectacle leg, the first nose bracket 5, the second nose bracket 6 and the second spectacle leg are located near the side of the face when a person wears them. The first mounting slot 7 is for the convenience of subsequent mounting of the first elastic fastening assembly and the first lens 3, the second mounting slot 8 is for the convenience of subsequent mounting of the second elastic fastening assembly and the second lens 4, the first notch 9 and the first connecting hole 10 are for the convenience of subsequent positioning and mounting of the first elastic fastening assembly, and the second notch 11 and the second connecting hole 12 are for the convenience of subsequent positioning and mounting of the second elastic fastening assembly. The first connecting hole 10 and the second connecting hole 12 can both be a through hole or a blind hole, or one of the first connecting hole 10 and the second connecting hole 12 is a through hole and the other is a blind hole. The first notch 9 is located on the side near the first lens 3 and connected to the first lens 3. Similarly, the second notch 11 is located on the side near the second lens 4 and connected with the second lens 4. Specifically, in FIG. 1, the first notch 9 is located on the left side of the first spectacle bow 1 near the first lens 3, and the second notch 11 is located on the right side of the second spectacle bow 2 near the second lens 4. Moreover, the first notch 9 and the second notch 11 are located on the side close to the face of a person when wearing them, and the first notch 9 and the second notch 11 can also be located on the side far away from the face of the person when wearing them.

The first elastic fastening assembly of the present invention is positioned and mounted in the first mounting slot 7 through the first notch 9 and the second connecting hole 12, the second elastic fastening assembly is positioned and mounted in the second mounting slot 8 through the second notch 11 and the second connecting hole 12, the first lens 3 is arranged in the first elastic fastening assembly, and the second lens 4 is arranged in the second elastic fastening assembly.

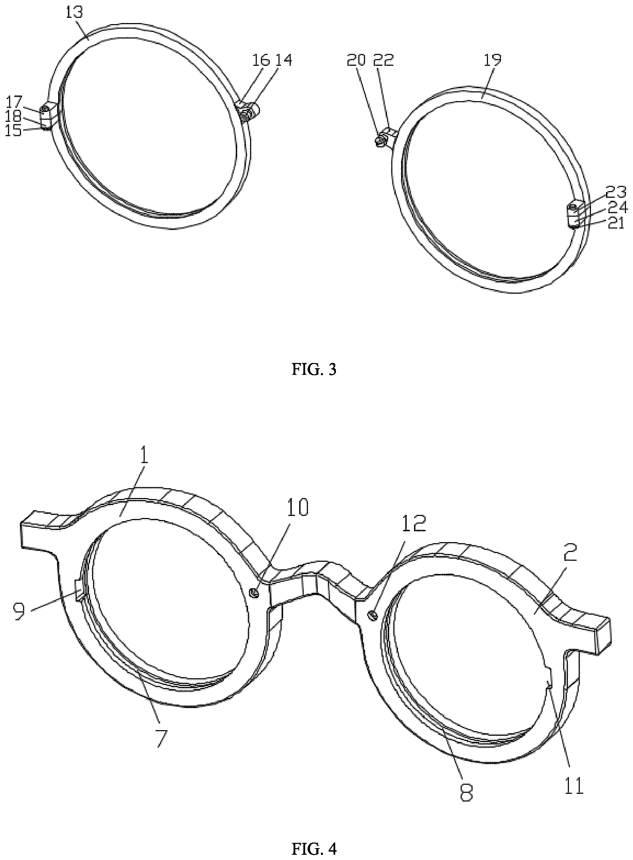

Continuing with reference to FIG. 1 to FIG. 4, the specific structures of the first elastic fastening assembly and the second elastic fastening assembly of the present invention are described in detail. Specifically, the first elastic fastening assembly comprises a first fastening ring 13, a first screw 14 and a second screw 15. The first fastening ring 13 is provided with a first convex part 16 and a first opening. The first fastening ring 13 is a ring as a whole, and the first opening causes the first fastening ring 13 to break. Taking FIG. 1 and FIG. 3 as an example, the first opening is located in the left middle of the first fastening ring 13, and the first convex part 16 is located in the upper right of the first fastening ring 13. It can be understood that the first convex part 16 is protruding towards the upper right of the first fastening ring 13. It can also be understood that the front side of the first convex part 16 and the front side of the first fastening ring 13 are located in the same plane, the first convex part 16 is provided with a first through hole, the first convex part 16 is clamped in the first connecting hole 10 and the first through hole corresponds to the first connecting hole 10 at the front and back ends, the first screw 14 is arranged in the first connecting hole 10 and the first through hole in a penetrating manner, the first connecting hole 10 can be a through hole or a blind hole. If the first connecting hole 10 is a through hole, the first screw 14 can be inserted into the first connecting hole 10 and the first through hole from front to back or from back to front as shown in FIG. 1. If the first connecting hole 10 is a blind hole from front to back, the first screw 14 can be inserted into the first connecting hole 10 and the first through hole from front to back in a penetrating manner. Alternatively, when the first connecting hole 10 is a blind hole from back to front, the first screw 14 is inserted in the first connecting hole 10 and the first through hole from back to front in a penetrating manner. It can be understood that the first connecting hole 10 is connected to the first mounting slot 7 in a direction towards the first lens 3, so as to facilitate subsequent positioning and mounting of the first convex part 16. The first fastening ring 13 can be made of a material with a certain degree of elasticity, or that has a certain deformability, the first fastening ring 13 is provided with a first connector 17 and a second connector 18 on both sides of the first opening, the first connector 17 and the second connector 18 are adjacent and separated from each other. Taking FIG. 3 as an example, the first connector 17 and the second connector 18 are located on the upper and lower sides of the first opening on the front side of the first fastening ring 13, the bottom surface of the first connector 17 is flush with the top surface of the first opening, the top surface of the second connector 18 is flush with the bottom surface of the first opening, the second screw 15 is provided on the first connector 17 and the second connector 18 in a penetrating manner. The first connector 17 and the second connector 18 are clamped in the first notch 9, the first lens 3 is mounted in the first fastening ring 13, the first fastening ring 13 is located in the first mounting slot 7, that is, the outer wall of the first fastening ring 13 is adapted to the first mounting slot 7.

Similarly, the second elastic fastening assembly comprises a second fastening ring 19, a third screw 20 and a fourth screw 21. The second fastening ring 19 is provided with a second convex part 22 and a second opening. The second fastening ring 19 is a ring as a whole, and the second opening causes the second fastening ring 19 to break. Taking FIG. 1 and FIG. 3 as an example, the second opening is located in the right middle of the second fastening ring 19, and the second convex part 22 is located in the upper left of the second fastening ring 19. It can be understood that the second convex part 22 is protruding towards the upper left of the second fastening ring 19. It can also be understood that the front side of the second convex part 22 and the front side of the second fastening ring 19 are located in the same plane, the second convex part 22 is provided with a second through hole, the first through hole and the second through hole are arranged in forward and backward directions, the second convex part 22 is clamped in the second connecting hole 12 and the second through hole corresponds to the second connecting hole 12 at the front and back ends, the third screw 20 is arranged in the second connecting hole 12 and the second through hole in a penetrating manner, the second connecting hole 12 can be a through hole or a blind hole. If the second connecting hole 12 is a through hole, the third screw 20 can be inserted into the second connecting hole 12 and the second through hole from front to back or from back to front as shown in FIG. 1. If the second connecting hole 12 is a blind hole from front to back, the third screw 20 can be inserted into the second connecting hole 12 and the second through hole from back to front in a penetrating manner. Alternatively, when the second connecting hole 12 is a blind hole from back to front, the third screw 20 is inserted in the second connecting hole 12 and the second through hole from back to front in a penetrating manner. It can be understood that the second connecting hole 12 is connected to the second mounting slot 8 in a direction towards the second lens 4, so as to facilitate subsequent positioning and mounting of the second convex part 22. The second fastening ring 19 can be made of a material with a certain degree of elasticity, or that has a certain deformability, the second fastening ring 19 is provided with a third connector 23 and a fourth connector 24 on both sides of the second opening, the third connector 23 and the fourth connector 24 are adjacent and separated from each other. Taking FIG. 3 as an example, the third connector 23 and the fourth connector 24 are located on the upper and lower sides of the second opening on the front side of the second fastening ring 19, the bottom surface of the third connector 23 is flush with the top surface of the second opening, the top surface of the fourth connector 24 is flush with the bottom surface of the second opening, the fourth screw 21 is provided on the third connector 23 and the fourth connector 24 in a penetrating manner. The third connector 23 and the fourth connector 24 are clamped in the second notch 11, the second lens 4 is mounted in the second fastening ring 19, the second fastening ring 19 is located in the second mounting slot 8, that is, the outer wall of the second fastening ring 19 is adapted to the second mounting slot 8.

The present invention also discloses a method for using the aforementioned buffalo horn eyewear, comprising the following steps:
S 1. taking the first fastening ring 13 and the second fastening ring 19, and then loosening the first screw 14, the second screw 15, the third screw 20 and the fourth screw 21;
S2. taking the first lens 3 and the second lens 4, and then enabling the first connector 17 to be away from the second connector 18, and enabling the third connector 23 to be away from the fourth connector 24, and widening the first opening and the second opening, and then clamping the first lens 3 into the first fastening ring 13, and clamping the second lens 4 into the second fastening ring 19;
S3. loosening the first connector 17 and the second connector 18 away from each other and the third connector 23 and the fourth connector 24 away from each other, and then mounting the first fastening ring 13 in the first mounting slot 7, mounting the second fastening ring 19 in the second mounting slot 8, and clamping the first connector 17 and the second connector 18 into the first notch 9, clamping the third connector 23 and the fourth connector 24 into the second notch 11, and at the same time, clamping the first convex part 16 into the first connecting hole 10, and clamping the second convex part 22 into the second connecting hole 12;
S4. aligning the first connecting hole 10 and the first through hole and aligning the second connecting hole 12 and the second through hole, and then taking the first screw 14 and the third screw 20, so that the first screw 14 is provided in the first connecting hole 10 and the first through hole in a penetrating manner, and the third screw 20 is provided in the second connecting hole 12 and the second through hole in a penetrating manner;
S5. taking the second screw 15 and the fourth screw 21, so that the second screw 15 is provided on the first connector 17 and the second connector 18 in a penetrating manner, the fourth screw 21 is provided on the third connector 23 and the fourth connector 24 in a penetrating manner; and
S6. wearing the buffalo horn eyewear by using the first spectacle leg, second spectacle leg, first nose bracket 5 and second nose bracket 6.

When the first lens 3 and the second lens 4 of the present invention need to be replaced, the present invention further comprises steps of replacing lenses:
loosening the second screw 15, then separating the first connector 17 and the second connector 18 and widening the first opening of the first fastening ring 13, then taking a new first lens 3 to mount into the first fastening ring 13, then loosening the first fastening ring 13, and then providing the second screw 15 on the first connector 17 and the second connector 18 in a penetrating manner; and
loosening the fourth screw 21, then separating the third connector 23 and the fourth connector 24 and widening the second opening of the second fastening ring 19, then taking a new second lens 4 to mount into the second fastening ring 19, then loosening the second fastening ring 19, and then providing the fourth screw 21 on the third connector 23 and the fourth connector 24 in a penetrating manner.

This embodiment is not intended to limit the shape, material, structure, etc., of the present invention in any form. Any simple modifications, equivalent changes, and modifications made to the above embodiments based on the technical essence of the present invention shall still fall within the scope of protection of the technical schemes of the present invention.

## Claims

1. A buffalo horn eyewear, wherein the buffalo horn eyewear comprises:
a first spectacle bow;
a second spectacle bow, which is symmetrical with the first spectacle bow and connected with the first spectacle bow, wherein a side of the first spectacle bow away from the second spectacle bow is provided with a first spectacle leg, a side of the second spectacle bow away from the first spectacle bow is provided with a second spectacle leg, a side of the first spectacle bow near the second spectacle bow is provided with a first nose bracket, a side of the second spectacle bow near the first spectacle bow is provided with a second nose bracket, a first mounting slot is provided in the first spectacle bow, a second mounting slot is provided in the second spectacle bow, the first spectacle bow is provided with a first notch and a first connecting hole, the first notch and the first connecting hole are connected with the first mounting slot, the second spectacle bow is provided with a second notch and a second connecting hole, and the second notch and the second connecting hole are connected with the second mounting slot;
a first elastic fastening assembly, which is positioned in the first mounting slot through the first notch and the second connecting hole;
a second elastic fastening assembly, which is positioned in the second mounting slot through the second notch and the second connecting hole;
a first lens, which is arranged in the first elastic fastening assembly; and
a second lens, which is arranged in the second elastic fastening assembly, and the first spectacle bow and the second spectacle bow are made of buffalo horn material.

2. The buffalo horn eyewear according to claim 1, wherein the first elastic fastening assembly comprises a first fastening ring, a first screw and a second screw, the first fastening ring is provided with a first convex part and a first opening, the first convex part is provided with a first through hole, the first convex part is clamped in the first connecting hole and the first through hole corresponds to the first connecting hole at front and back ends, the first screw is arranged in the first connecting hole and the first through hole in a penetrating manner, both sides of the first opening of the first fastening ring are provided with a first connector and a second connector, the first connector and the second connector are adjacent and separated from each other, the second screw is arranged on the first connector and the second connector in a penetrating manner, the first connector and the second connector are clamped in the first notch, and the first lens is mounted in the first fastening ring.

3. The buffalo horn eyewear according to claim 2, wherein the second elastic fastening assembly comprises a second fastening ring, a third screw and a fourth screw, the second fastening ring is provided with a second convex part and a second opening, the second convex part is provided with a second through hole, the second convex part is clamped in the second connecting hole and the second through hole corresponds to the second connecting hole at front and back ends, the third screw is arranged in the second connecting hole and the second through hole in a penetrating manner, both sides of the second opening of the second fastening ring are provided with a third connector and a fourth connector, the third connector and the fourth connector are adjacent and separated from each other, the fourth screw is arranged on the third connector and the fourth connector in a penetrating manner, the third connector and the fourth connector are clamped in the second notch, and the second lens is mounted in the second fastening ring.

4. The buffalo horn eyewear according to claim 3, wherein the first nose bracket, the second nose bracket, the first spectacle bow and the second spectacle bow are integrally formed, and the first nose bracket, the second nose bracket, the first spectacle leg and the second spectacle leg are all made of buffalo horn material.

5. A method of use of the buffalo horn eyewear according to claim 4, wherein the method comprises the following steps:
S 1. taking the first fastening ring and the second fastening ring, and then loosening the first screw, the second screw, the third screw and the fourth screw;
S2. taking the first lens and the second lens, and then enabling the first connector to be away from the second connector, and enabling the third connector to be away from the fourth connector, and widening the first opening and the second opening, and then clamping the first lens into the first fastening ring, and clamping the second lens into the second fastening ring;
S3. loosening the first connector and the second connector away from each other and the third connector and the fourth connector away from each other, and then mounting the first fastening ring in the first mounting slot, mounting the second fastening ring in the second mounting slot, and clamping the first connector and the second connector into the first notch, clamping the third connector and the fourth connector into the second notch, and at the same time, clamping the first convex part into the first connecting hole, and clamping the second convex part into the second connecting hole;
S4. aligning the first connecting hole and the first through hole and aligning the second connecting hole and the second through hole, and then taking the first screw and the third screw, so that the first screw is provided in the first connecting hole and the first through hole in a penetrating manner, and the third screw is provided in the second connecting hole and the second through hole in a penetrating manner;
S5. taking the second screw and the fourth screw, so that the second screw is provided on the first connector and the second connector in a penetrating manner, the fourth screw is provided on the third connector and the fourth connector in a penetrating manner; and
S6. wearing the buffalo horn eyewear by using the first spectacle leg, second spectacle leg, first nose bracket and second nose bracket.

6. According to the method of using the buffalo horn eyewear as described in claim 5, the method further comprises steps of replacing lenses:
loosening the second screw, then separating the first connector and the second connector and widening the first opening of the first fastening ring, then taking a new first lens to mount into the first fastening ring, then loosening the first fastening ring, and then providing the second screw on the first connector and the second connector in a penetrating manner; and loosening the fourth screw, then separating the third connector and the fourth connector and widening the second opening of the second fastening ring, then taking a new second lens to mount into the second fastening ring, then loosening the second fastening ring, and then providing the fourth screw on the third connector and the fourth connector in a penetrating manner.
